(19) Europäisches Patentamt
European Patent Office
Office européen des brevets

(11) EP 1 227 358 A2

(12) EUROPEAN PATENT APPLICATION

(43) Date of publication:
**31.07.2002 Bulletin 2002/31**

(51) Int Cl.[7]: **G02B 27/10**, G02B 5/28

(21) Application number: **02000308.3**

(22) Date of filing: **03.01.2002**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **25.01.2001 JP 2001016687**
**19.10.2001 JP 2001322080**

(71) Applicant: **CANON KABUSHIKI KAISHA**
**Ohta-ku, Tokyo (JP)**

(72) Inventor: **Sawamura, Mitsuharu**
**Ohta-ku, Tokyo (JP)**

(74) Representative:
**Leson, Thomas Johannes Alois, Dipl.-Ing.**
**Tiedtke-Bühling-Kinne & Partner GbR,**
**TBK-Patent,**
**Bavariaring 4**
**80336 München (DE)**

# (54) Optical element and liquid crystal projector and camera using the same

(57) An optical element comprises a transparent substrate, typically a glass prism, and a dielectric multilayer film formed on the transparent substrate. The dielectric multilayer film is formed by alternately laying low refractive index layers showing a refractive index between 1.6 and 1.8 and high refractive index layers showing a refractive index not less than 2.2. The multilayer film satisfies the relation of $1 \leq (n_H \times d_H)/(n_L \times d_L) \leq 2$, where $n_H$ and $d_H$ represent the refractive index and the film thickness, respectively, of each high refractive index layer, while $n_L$ and $d_L$ represent those of each low refractive index layer. The optical element is applicable to various optical instruments including liquid crystal projectors and cameras.

*FIG. 2*

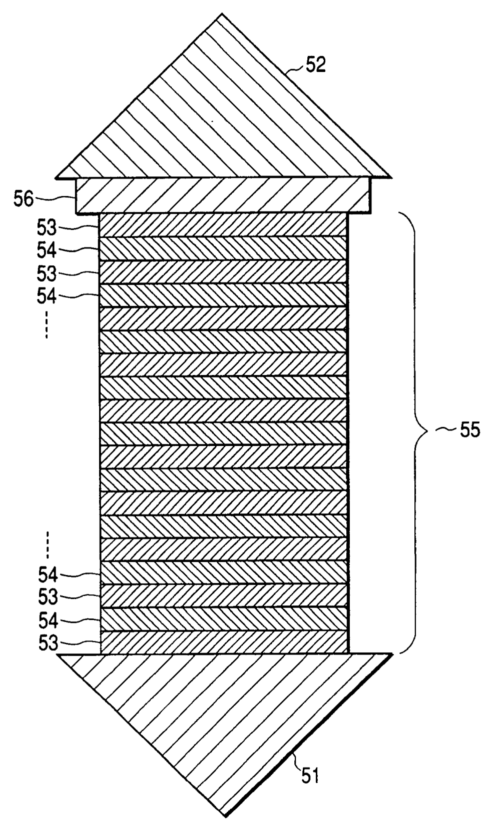


EP 1 227 358 A2

## Description

BACKGROUND OF THE INVENTION

Field of the Invention

This invention relates to an optical element to be used for color separation or color synthesis and also to a liquid crystal projector and a camera realized by using such an optical element.

Related Background Art

Dichroic mirrors, dichroic prisms and other optical elements are being popularly used for color separation or color synthesis of light showing a plurality of different wavelengths in liquid crystal projectors and cameras such as television cameras, video cameras and digital cameras.

FIG. 1 of the accompanying drawing schematically illustrates the optical system of a liquid crystal projector of the above identified type. Referring to FIG. 1, white light emitted from light source 10 is transmitted through lens 11 and converted to S-polarized light by polarization converting element 12. Dichroic mirror 13 is used for color separation of the light beam transmitted through the polarization converting element 12. More specifically, red light R is reflected by the dichroic mirror 13, while blue light B and green light G are transmitted through the dichroic mirror 13. The red light R reflected by the dichroic mirror 13 is reflected further by total reflection mirrors 15, 16 and enters liquid crystal panel 20, where it is modulated according to a video signal for red color.

On the other hand, after being transmitted through the dichroic mirror 13, blue light B is reflected by dichroic mirror 14, while green light G is transmitted through it for color separation. In short, the dichroic mirrors 13, 14 form a color separation optical system. The blue light B reflected by the dichroic mirror 14 is reflected further by total reflection mirrors 17, 18 and enters liquid crystal panel 21,
where it is modulated according to a video signal for blue color. The blue light B modulated by the liquid crystal panel 21 is then made to enter cross dichroic prism 22.

The green light G transmitted through the dichroic mirror 14 enters liquid crystal panel 19, where it is modulated according to a video signal for green color. The green light G modulated by the liquid crystal panel 19 is then made to enter the cross dichroic prism 22.

The cross dichroic prism 22 is prepared by bonding a plurality of prisms along two cementing surfaces 22a, 22b that intersect each other. Each of the cementing surfaces 22a, 22b is coated with a dielectric multilayer film (dichroic film) formed by alternately laying high refractive index layers of a dielectric substance showing a high refractive index and low refractive index layers of another dielectric substance showing a refractive index lower than that of the high refractive index layers.

The red light R, the blue light B and the green light G entering the cross dichroic prism 22 are combined together for color synthesis by the cross dichroic prism 22 and projected onto screen 24 by means of projection lens 23. In this way, a color image is displayed on the screen 24.

In the cross dichroic prism 22, red light R is reflected by the red reflecting dichroic film arranged on the cementing surface 22a and transmitted through the blue reflecting dichroic film arranged on the cementing surface 22b before it is taken out. Similarly, blue light B is reflected by the blue reflecting dichroic film arranged on the cementing surface 22b and transmitted through the red reflecting dichroic film arranged on the cementing surface 22a before it is taken out. On the other hand, green light G is transmitted through both the blue reflecting dichroic film arranged on the cementing surface 22b and the red reflecting dichroic film arranged on the cementing surface 22a before it is taken out. Alternatively, the arrangement of FIG. 1 may be so modified that a polarization converting element is arranged on the light path of green light G and green light G is converted to P-polarized light before entering the cross dichroic prism 22.

Conventionally, if the design wavelength is $\lambda$, a dielectric multilayer film (dichroic film) formed by alternately laying high refractive index layers and low refractive index layers having an optical film thickness of about $\lambda/4$ is popularly used for a cross dichroic prism 22 or some other similar optical element. When the refractive index of the high refractive index layers is $n_H$, the film thickness of each of the high refractive index layers is $d_H$, the refractive index of the low refractive index layers is $n_L$ and the film thickness of each of the low refractive index layers is $d_L$, the cross dichroic prism 22 is prepared in such a way that the ratio of the optical film thickness of the high refractive index layers, or the product of the refractive index and the film thickness ($n_H \times d_H$), to the optical film thickness ($n_L \times d_L$) satisfies the conditional formula below.

$$(n_H \times d_H) / (n_L \times d_L) \leq 1 \quad (1)$$

However, such a dichroic film as described above shows a spectral reflectance characteristic having a high angle dependency as will be discussed hereinafter by referring to FIG. 9. Such a high angle dependency of the reflectance of a dichroic film gives rise to a degraded image quality when a liquid crystal projector as shown in FIG. 1 is used. Both the center beam of red light R and that of blue light B striking the cementing surfaces 22a, 22b show an angle of incidence of 45°, but they are normally divergent fluxes of light or convergent fluxes of light. In other words, the angle of incidence of their peripheral light beams can vary within an angular range found both at the positive side and at the negative side relative to 45°. Therefore, when a dichroic film having a high angle dependency as shown in FIG. 9 is used, the reflectance can vary greatly depending on the angle of incidence of light beam to consequently give rise to a problem of uneven distribution of color and brightness in the image projected onto the screen. This problem is particularly remarkable on the red light reflecting dichroic film arranged on the cementing surface 22a of the cross dichroic prism 22.

Meanwhile, Japanese Patent Application Laid-Open No. 11-101913 discloses an optical element whose spectral reflectance characteristic shows a reduced angle dependency. The disclosed optical element is realized by forming a multilayer film prepared by alternately laying high refractive index layers with a refractive index of 2.0 or more and low refractive index layers with a refractive index of 1.6 or less on a transparent substrate. When the refractive index of the high refractive index layers is $n_H$, the film thickness of each of the high refractive index layers is $d_H$, the refractive index of the low refractive index layers is $n_L$ and the film thickness of each of the low refractive index layers is $d_L$, the multilayer film is formed so as to satisfy the conditional formula below.

$$(n_H \times d_H) / (n_L \times d_L) \leq 2 \quad (2)$$

While an optical element disclosed in Japanese Patent Application Laid-Open No. 11-101913 shows an improved angle dependency for its reflectance, it gives rise to a problem of ripples in a short wavelength zone for the spectral reflectance characteristic as will be discussed herein by referring to FIG. 5. In other words, it shows a reduced transmittance for blue light. Such ripples can degrade the image quality produced by means of the optical element due to a flare phenomenon.

## SUMMARY OF THE INVENTION

In view of the above identified technological problems of the prior art, it is therefore an object of the present invention to provide an optical element showing a spectral reflectance characteristic that is scarcely angle-dependent and hardly shows ripples in a short wavelength zone.

Another object of the present invention is to provide a liquid crystal projector and a camera comprising an optical element according to the invention and adapted to provide high quality images.

In the first aspect of the invention, there is provided an optical element comprising:

a transparent substrate; and
a multilayer film formed on said transparent substrate;
said multilayer film being formed by alternately laying one or more than one pairs of a low refractive index layer showing a refractive index between 1.6 and 1.8 and a high refractive index layer showing a refractive index not less than 2.2, said multilayer film satisfying the conditional formula of

$$1 \leq (n_H \times d_H)/(n_L \times d_L) \leq 2,$$

where the refractive index of the high refractive index layer is $n_H$, the film thickness of the high refractive index layer is $d_H$, the refractive index of the low refractive index layer is $n_L$ and the film thickness of the low refractive index layer is $d_L$.

In the second aspect of the invention, there is provided a liquid crystal projector comprising:

a light source;
a color separation optical system including the above optical element for dividing the light emitted from said light source into a plurality of light beams having wavelengths different from each other;
a plurality of liquid crystal panels arranged on the respective light paths of said plurality of light beams produced by color separation;
an optical element for synthetically combining said plurality of light beams modulated by said respective liquid crystal panels; and
a projection lens for projecting the synthetically combined light beam produced from said optical element on a screen.

In the third aspect of the invention, there is provided a camera comprising:

an objective lens for taking in light showing an image;
an optical element adopting the above constitution for dividing the light taken in by said objective lens into a plurality of light beams having wavelengths different from each other for color separation;
a plurality of image pickup elements for respectively detecting said plurality of light beams after said color separation and outputting respective video signals; and
a signal processing circuit for processing the video signal outputs from said image pickup elements.

## BRIEF DESCRIPTION OF THE DRAWINGS

FIG. 1 is a schematic block diagram of a liquid crystal projector to which the present invention is applicable, illustrating its configuration.
FIG. 2 is a schematic cross sectional view of the optical element of Example 1.
FIG. 3 is a graph illustrating the influence of the ratio of the refractive index and the optical film thickness of the multilayer film of each of a number of different optical elements on the angle dependency of the reflectance characteristic of the optical element.
FIG. 4 is a graph illustrating the influence of the ratio of the refractive index and the optical film thickness of the multilayer film of each of a number of different optical elements on the transmittance of light in the transmission wavelength zone of the optical element.
FIG. 5 is a graph illustrating the spectral reflectance characteristic of the optical element of Example 1.
FIG. 6 is a schematic cross sectional view of the optical element of Comparative Example 1.
FIG. 7 is a graph illustrating the spectral reflectance characteristic of the optical element of Comparative Example 1.
FIG. 8 is a schematic cross sectional view of the optical element of Comparative Example 2.
FIG. 9 is a graph illustrating the spectral reflectance characteristic of the optical element of Comparative Example 2.
FIG. 10 is a schematic cross sectional view of the optical element of Example 2.
FIG. 11 is a graph illustrating the spectral reflectance characteristic of the optical element of Example 2.
FIG. 12 is a schematic block diagram of a camera to which the present invention is applicable, illustrating its configuration.

## DESCRIPTION OF THE PREFERRED EMBODIMENTS

Now, the present invention will be described by referring to the accompanying drawings that illustrate preferred embodiments of the invention.
FIG. 2 is a schematic cross sectional view of an embodiment of optical element according to the invention. The optical element in FIG. 2 comprises a dielectric multilayer film 55 formed by alternately laying low refractive index layers 53 and high refractive index layers 54 on a prism 51 operating as transparent substrate. Another prism 52 is bonded to the multilayer film 55 by way of an adhesive layer 56.
As a result of intensively looking into the prior art, the inventor of the present invention found that the range of refractive index of the low refractive index layers is important for reducing the angle dependency of the spectral reflectance characteristic of an optical element because the refractive index of the high refractive index layers is restricted by the material used for them. Therefore, in an optical element according to the invention, the high refractive index layers 54 show a refractive index not less than 2.2 while the low refractive index layers 53 show a refractive index between 1.6 and 1.8. When the refractive index of the high refractive index layers is $n_H$ and that of the low refractive index layers is $n_L$, the relationship of the refractive indexes is expressed by formulas (3) and (4) below.

$$n_H \geq 2.2 \quad (3)$$

$$1.6 \le n_L \le 1.8 \tag{4}$$

On the other hand, the inventors of the present invention also found that an optimal optical film thickness needs to be selected to reduce ripples in the spectral reflectance characteristic and hence avoid any reduction of the transmittance in the transmission wavelength zone. Thus, when the refractive index of the high refractive index layer is $n_H$, the film thickness of the high refractive index layers is $d_H$, the refractive index of the low refractive index layer is $n_L$ and the film thickness of the low refractive index layers is $d_L$, the ratio of the optical film thickness of the high refractive index layers, or the product of the refractive index and the film thickness ($n_H \times d_H$), to the optical film thickness of the low refractive index layers ($n_L \times d_L$) is made to satisfy the conditional formula (5) below.

$$1 \le (n_H \times d_H)/(n_L \times d_L) \le 2 \tag{5}$$

In an optical element according to the invention, the high refractive index layers are typically formed by using a material selected from a group of materials including $TiO_2$, $Nb_2O_5$ and $Ta_2O_5$ as principal ingredient. On the other hand, the low refractive index layers are typically formed by using a material selected from a group of materials including $Al_2O_3$, and a mixture of $Al_2O_3$ and $TiO_2$ as principal ingredient.

Now, the influence of the ratio of the refractive index and the optical film thickness of each of the layers on the angle dependency will be discussed by referring to FIG. 3. In FIG. 3, the horizontal axis of the graph indicates the ratio of the optical film thickness of the high refractive index layers to that of the low refractive index layers, or $(n_H \times d_H)/(n_L \times d_L)$. On the other hand, the vertical axis of the graph indicates the difference $\Delta\lambda$ between the half-value wavelength of S-polarized light striking the multilayer film at an angle of incidence of 40° and that of S-polarized light striking the multilayer film at an angle of 50°.

Referring to FIG. 3, the data 1 is obtained by using an optical element comprising high refractive index layers made of $TiO_2$, whose refractive index is 2.4, and low refractive index layers made of a mixture of $Al_2O_3$ and $TiO_2$, whose refractive index is 1.70. The data 2 is obtained by using an optical element comprising high refractive index layers made of $TiO_2$ whose refractive index is 2.3, and low refractive index layers made of $Al_2O_3$ whose refractive index is 1.63. The data 3 is obtained by using an optical element comprising high refractive index layers made of $TiO_2$ whose refractive index is 2.3, and low refractive index layers made of $SiO_2$ whose refractive index is 1.45. Finally, the data 4 is obtained by using an optical element comprising high refractive index layers made of $ZrO_2$ whose refractive index is 2.1, and low refractive index layers made of $SiO_2$, whose refractive index is 1.45.

As clearly seen from FIG. 3, the optical element of the data 1 and that of the data 2 that satisfy the requirements of the formulas (4) and (5) show a dramatically improved angle dependency if compared with the optical elements of data 3 and 4. If the angle dependency is held to be same, the optical film thickness of the optical elements of the data 1 and 2 can be made much smaller than that of the optical element of the data 3.

FIG. 4 is a graph illustrating the influence of the ratio of the refractive index and the optical film thickness of the multilayer film of each of a number of different optical elements on the transmittance of light in the transmission wavelength zone of the optical element. In FIG. 4, the horizontal axis of the graph indicates the ratio of the optical film thickness of the high refractive index layers to that of the low refractive index layers, or $(n_H \times d_H)/(n_L \times d_L)$. On the other hand, the vertical axis of the graph indicates the discrepancy between the target value and the actual value of the optical characteristic as expressed in terms of root mean square (RMS) that is observed when S-polarized light is made to strike the multilayer film. The smaller the RMS value, the better the transmittance.

Referring to FIG. 4, the data 1 obtained by using an optical element comprising high refractive index layers made of $TiO_2$, whose refractive index is 2.4, and low refractive index layers made of a mixture of $Al_2O_3$ and $TiO_2$, whose refractive index is 1.70. The data 2 is obtained by using an optical element comprising high refractive index layers made of $TiO_2$ whose refractive index is 2.3, and low refractive index layers made of $Al_2O_3$ whose refractive index is 1.63. The data 3 is obtained by using an optical element comprising high refractive index layers made of $TiO_2$ whose refractive index is 2.3, and low refractive index layers made of $SiO_2$ whose refractive index is 1.45. Finally, the data 4 is obtained by using an optical element comprising high refractive index layers made of $ZrO_2$ whose refractive index is 2.1, and low refractive index layers made of $SiO_2$, whose refractive index is 1.45.
The optical elements of FIG. 4 have respective configurations same as those of their counterparts of the data 1 through 4 of FIG. 3. However, the film thicknesses of some of the films were regulated so as to minimize the RMS value for each of the optical elements of FIG. 4.

Furthermore, in FIG. 4, the curve 1 is obtained by fitting a curve expressed by a polynomial to the data 4 and the curve 2 is obtained by fitting a curve expressed by a polynomial to the data 3.

By seeing FIG. 4, it will be appreciated that the RMS value increases to lower the transmittance as the optical film thickness ratio increases for each of the optical elements. In other words, both the angle dependency and the transmittance are not improved concurrently simply by raising the optical film thickness ratio. The optical elements of the data 1 and that of the data 2 satisfy the requirements of the formulas (4) and (5) and show a large RMS value. However, a low optical film thickness ratio can be used for the optical elements of the data 1 and 2 to obtain a same transmittance. Thus, an optical element according to the invention can perform well with good characteristic values when it meets realistic requirements for the film thickness and the refractive index.

Now, the present invention will be described further by way of specific examples and comparative examples.

Example 1

In this example, an optical element having a configuration as shown in FIG. 2 was prepared by alternately laying low refractive index layers 53 that are made of $Al_2O_3$ and show a refractive index of 1.63 and high refractive index layers 54 that are made of $TiO_2$ and show a refractive index of 2.3 to a total of 19 layers by means of vacuum evaporation to produce a dielectric multilayer film 55 on a prism 51. The prism 51 was prepared by using a glass material named BSL7 and available from Ohara Co., Ltd. Another prism 52 was bonded onto the dielectric multilayer film 55 by means of an adhesive layer 56. Table 1 below shows the arrangement of layers of the optical element.

Table 1

| layer No. | material | optical film thickness nd |
|---|---|---|
| prism | BSL7 | |
| 1 | $Al_2O_3$ | 111 |
| 2 | $TiO_2$ | 239 |
| 3 | $Al_2O_3$ | 183 |
| 4 | $TiO_2$ | 240 |
| 5 | $Al_2O_3$ | 141 |
| 6 | $TiO_2$ | 240 |
| 7 | $Al_2O_3$ | 141 |
| 8 | $TiO_2$ | 240 |
| 9 | $Al_2O_3$ | 141 |
| 10 | $TiO_2$ | 240 |
| 11 | $Al_2O_3$ | 141 |
| 12 | $TiO_2$ | 240 |
| 13 | $Al_2O_3$ | 141 |
| 14 | $TiO_2$ | 240 |
| 15 | $Al_2O_3$ | 141 |
| 16 | $TiO_2$ | 240 |
| 17 | $Al_2O_3$ | 184 |
| 18 | $TiO_2$ | 253 |
| 19 | $Al_2O_3$ | 210 |
| adhesive layer | | |

The optical element of Example 1 above showed an optical film thickness ratio of the high refractive index layers to the low refractive index layers equal to 1.70 in the principal constitution of the optical element. FIG. 5 shows the spectral reflectance characteristic obtained when S-polarized light was made to strike the optical element. In FIG. 5, the horizontal axis indicates the wavelength of incident light and the vertical axis indicates the reflectance. The curves in FIG. 5 show the reflectance characteristics obtained for rays of light striking the optical element with respective angles of incidence of 40°, 45° and 50°.

For the optical element of Example 1, the difference $\Delta\lambda$ between the half-value wavelength of light entering the optical element with an angle of incidence of 40° and that of light entering the optical element with an angle of incidence of 50° as described above by referring to FIG. 3 was equal to 50nm. The discrepancy between the target value and the actual value of the optical characteristic as described above by referring to FIG. 4 and expressed in terms of root mean square (RMS) was 2.72 for the optical element of Example 1. Thus, the angle dependency of the spectral reflectance characteristic of the optical element of Example 1 was small. Additionally, the spectral reflectance characteristic scarcely showed ripples and hence the reduction in the transmittance in the transmission wavelength zone was small so that the optical element provided good optical characteristics.

Comparative Example 1

In this comparative example, an optical element having a configuration as shown in FIG. 6 was prepared by alternately laying high refractive index layers 44 that are made of $TiO_2$ and show a refractive index of 2.3 and low refractive index layers 43 that are made of $SiO_2$ and show a refractive index of 1.45 to a total of 22 layers by means of vacuum evaporation to produce a dielectric multilayer film 45 on a prism 41. The prism 41 was prepared by using a glass material named BSL7 and available from Ohara Co., Ltd. Another prism 42 was bonded onto the dielectric multilayer film 45 by means of an adhesive layer 46. Table 2 below shows the arrangement of layers of the optical element.

Table 2

| layer No. | material | optical film thickness nd |
|---|---|---|
| prism | BSL7 | |
| 1 | $TiO_2$ | 229 |
| 2 | $SiO_2$ | 268 |
| 3 | $TiO_2$ | 250 |
| 4 | $SiO_2$ | 66 |
| 5 | $TiO_2$ | 291 |
| 6 | $SiO_2$ | 66 |
| 7 | $TiO_2$ | 291 |
| 8 | $SiO_2$ | 66 |
| 9 | $TiO_2$ | 291 |
| 10 | $SiO_2$ | 66 |
| 11 | $TiO_2$ | 291 |
| 12 | $SiO_2$ | 66 |
| 13 | $TiO_2$ | 291 |
| 14 | $SiO_2$ | 66 |
| 15 | $TiO_2$ | 291 |
| 16 | $SiO_2$ | 66 |
| 17 | $TiO_2$ | 291 |
| 18 | $SiO_2$ | 66 |
| 19 | $TiO_2$ | 291 |
| 20 | $SiO_2$ | 122 |
| 21 | $TiO_2$ | 273 |
| 22 | $SiO_2$ | 20 |
| adhesive layer | | |

The optical element of Comparative Example 1 above showed an optical film thickness ratio of the high refractive index layers to the low refractive index layers equal to 4.44 in the principal constitution of the optical element. FIG. 7 shows the spectral reflectance characteristic obtained when S-polarized light was made to strike the optical element. In FIG. 7, the horizontal axis indicates the wavelength of incident light and the vertical axis indicates the reflectance. The curves in FIG. 7 show the reflectance characteristics obtained for rays of light striking the optical element with respective angles of incidence of 40°, 45° and 50°.

For the optical element of Comparative Example 1, the difference $\Delta\lambda$ between the half-value wavelength of light entering the optical element with an angle of incidence of 40° and that of light entering the optical element with an angle of incidence of 50° as described above by referring to FIG. 3 was equal to 44nm. The discrepancy between the target value and the actual value of the optical characteristic as described above by referring to FIG. 4 and expressed in terms of root mean square (RMS) was 5.82. Thus, while the angle dependency of the spectral reflectance characteristic of the optical element of Comparative Example 1 was small, the spectral reflectance characteristic showed large ripples and hence the transmittance in the transmission wavelength zone was low so that the optical element was not suitable for practical applications. Additionally, the film forming rate of $TiO_2$ film cannot be raised significantly because it becomes a high absorption layer when it is formed at a high rate. Therefore, the optical element of Comparative Example 1 showed a low productivity if compared with that of Example 1 as the high refractive index layers ($TiO_2$ films) were made to have a large thickness.

Comparative Example 2

In this comparative example, an optical element having a configuration as shown in FIG. 8 was prepared by alternately laying high refractive index layers 34 that are made of $TiO_2$ and show a refractive index of 2.3 and low refractive index layers 33 that are made of $SiO_2$ and show a refractive index of 1.45 to a total of 12 layers by means of vacuum evaporation to produce a dielectric multilayer film 35 on a prism 31. The prism 31 was prepared by using a glass material named BSL7 and available from Ohara Co., Ltd. Another prism 32 was bonded onto the dielectric multilayer film 35 by means of an adhesive layer 36. Table 3 below shows the arrangement of layers of the optical element.

Table 3

| layer No. | material | optical film thickness nd |
|---|---|---|
| prism | BSL7 | |
| 1 | $TiO_2$ | 240 |
| 2 | $SiO_2$ | 263 |
| 3 | $TiO_2$ | 216 |
| 4 | $SiO_2$ | 226 |
| 5 | $TiO_2$ | 216 |
| 6 | $SiO_2$ | 226 |
| 7 | $TiO_2$ | 216 |
| 8 | $SiO_2$ | 226 |
| 9 | $TiO_2$ | 216 |
| 10 | $SiO_2$ | 255 |
| 11 | $TiO_2$ | 235 |
| 12 | $SiO_2$ | 304 |
| adhesive layer | | |

The optical element of Comparative Example 2 above showed an optical film thickness ratio of the high refractive index layers to the low refractive index layers equal to 0.95 in the principal costitution of the optical element. FIG. 9 shows the spectral reflectance characteristic obtained when S-polarized light was made to strike the optical element. In FIG. 9, the horizontal axis indicates the wavelength of incident light and the vertical axis indicates the reflectance. The curves in FIG. 9 show the reflectance characteristics obtained for rays of light striking the optical element with respective angles of incidence of 40°, 45° and 50°.

For the optical element of Comparative Example 2, the difference $\Delta\lambda$ between the half-value wavelength of light entering the optical element with an angle of incidence of 40° and that of light entering the optical element with an angle of incidence of 50° as described above by referring to FIG. 3 was equal to 84nm. The discrepancy between the target value and the actual value of the optical characteristic as described above by referring to FIG. 4 and expressed in terms of root mean square (RMS) was 0.69. Thus, while the spectral reflectance characteristic of the optical element of Comparative Example 2 showed small ripples, its spectral reflectance characteristic had a high angle dependency so that the optical element was not suitable for practical applications.

Example 2

In this example, an optical element having a configuration as shown in FIG. 10 was prepared by alternately laying low refractive index layers 63 that are made of a mixture of $Al_2O_3$ and $TiO_2$ and show a refractive index of 1.70 and high refractive index layers 64 that are made of $TiO_2$ and show a refractive index of 2.4 to a total of 21 layers by means of vacuum evaporation to produce a dielectric multilayer film 65 on a prism 61. The prism 61 was prepared by using a glass material named BSL7 and available from Ohara Co., Ltd. Another prism 62 was bonded onto the dielectric multilayer film 65 by means of an adhesive layer 66. Table 4 below shows the arrangement of layers of the optical element.

Table 4

| layer No. | material | optical film thickness nd |
|---|---|---|
| prism | BSL7 | |
| 1 | $Al_2O_3$+ $TiO_2$ | 103 |
| 2 | $TiO_2$ | 220 |
| 3 | $Al_2O_3$+ $TiO_2$ | 178 |
| 4 | $TiO_2$ | 236 |
| 5 | $Al_2O_3$+ $TiO_2$ | 139 |
| 6 | $TiO_2$ | 236 |
| 7 | $Al_2O_3$+ $TiO_2$ | 139 |
| 8 | $TiO_2$ | 236 |
| 9 | $Al_2O_3$+ $TiO_2$ | 139 |
| 10 | $TiO_2$ | 236 |
| 11 | $Al_2O_3$+ $TiO_2$ | 139 |
| 12 | $TiO_2$ | 236 |
| 13 | $Al_2O_3$+ $TiO_2$ | 139 |
| 14 | $TiO_2$ | 236 |
| 15 | $Al_2O_3$+ $TiO_2$ | 139 |
| 16 | $TiO_2$ | 236 |
| 17 | $Al_2O_3$+ $TiO_2$ | 139 |
| 18 | $TiO_2$ | 236 |
| 19 | $Al_2O_3$+ $TiO_2$ | 216 |
| 20 | $TiO_2$ | 247 |
| 21 | $Al_2O_3$+ $TiO_2$ | 163 |
| adhesive layer | | |

The optical element of Example 2 above showed an optical film thickness ratio of the high refractive index layers to the low refractive index layers equal to 1.70 in the principal constitution of the optical element. FIG. 11 shows the spectral reflectance characteristic obtained when S-polarized light was made to strike the optical element. In FIG. 11, the horizontal axis indicates the wavelength of incident light and the vertical axis indicates the reflectance. The curves in FIG. 11 show the reflectance characteristics obtained for rays of light striking the optical element with respective angles of incidence of 40°, 45° and 50°.

For the optical element of Example 2, the difference $\Delta\lambda$ between the half-value wavelength of light entering the optical element with an angle of incidence of 40° and that of light entering the optical element with an angle of incidence of 50° as described above by referring to FIG. 3 was equal to 44nm. The discrepancy between the target value and the actual value of the optical characteristic as described above by referring to FIG. 4 and expressed in terms of root mean square (RMS) was 3.81. Thus, the angle dependency of the spectral reflectance characteristic of the optical element of Example 2 was small. Additionally, the spectral reflectance characteristic scarcely showed ripples and hence the reduction in the transmittance in the transmission wavelength zone was small so that the optical element provided good optical characteristics.

A liquid crystal projectors having a configuration as shown in FIG. 1 was prepared by using an optical element according to the invention and described above. Referring to FIG. 1, the optical element prepared in Example 1 or 2 was used for the cross dichroic prism 22. Thus, the cross dichroic prism 22 is formed by forming a dielectric multilayer film as described above by referring to Example 1 or 2 on one of the glass prisms and then bonding them to each other along the cementing surface 22a. Otherwise, the cross dichroic prism 22 has a configuration same as the one described above by referring to FIG. 1 so that it will not be described here any further.

While the present invention was applied to the cementing surface 22a of the cross dichroic prism 22 in the above description, the present invention may also be applied to the cementing surface 22b of the cross dichroic prism 22, the dichroic mirror 13 and/or the dichroic mirror 14.

FIG. 12 is a schematic block diagram of a camera to which the present invention is applicable, illustrating its configuration. The camera 70 may be used as television camera, video camera or digital camera. An optical element according to the invention is used as color separation prism 72 in the camera 70. The color separation prism 72 comprises a first prism 73, a second prism 74 and a third prism 75, each of which may be made of any appropriate glass material.

Referring to FIG. 12, the light taken into the camera 70 by objective lens 71 is then made to strike the light receiving plane 73a of the first prism 73 of the color separation prism 72. Of the light that enters the first prism 73 through the light receiving plane 73a, only blue light B is reflected by the blue reflecting dichroic film arranged on the light transmitting plane 73b of the first prism 73, while the remaining part of the light is transmitted through it. The blue light B reflected by the light transmitting plane 73b is totally reflected by the light receiving plane 73a to exit from the first prism 73 and become detected by solid state image pickup element 76, which solid state image pickup element 76 outputs a video signal representing the image formed by the blue light B.

The light transmitted through the light transmitting plane 73b of the first prism 73 is made to proceed through the gap between the first and second prisms and enter the second prism 74 through its light receiving surface 74a. Of the light that enters through the light receiving plane 74a, only red light R is reflected by the red reflecting dichroic film arranged on the light transmitting plane 74b of the second prism 74, while the remaining green light G is transmitted through it. The red light reflected by the light transmitting plane 74b is totally reflected by the light receiving plane 74a to exit from the second prism 74 and become detected by solid state image pickup element 77, which solid state image pickup element 77 outputs a video signal representing the image formed by the red light R.

The green light G transmitted through the light transmitting plane 74b of the second prism 74 passes through the third prism 75, exits from the latter and becomes detected by solid state image pickup element 78, which solid state image pickup element 78 outputs a video signal representing the image formed by the green light G.

The video signals output from the solid state image pickup elements 76, 77 and 78 are then input to and processed by signal processing circuit 79 to produce a color image. The solid state image pickup elements 76, 77 and 78 may be CCD sensors or CMOS sensors.

The present invention is applied to the light transmitting plane 74b of the second prism 74 in the above described camera. More specifically, a dielectric multilayer film as described above for Example 1 or 2 is formed on the second prism 74 and bonded to the third prism 75. Then, the second and third prisms are combined with the first prism 73 to produce a color separation prism 72.

The present invention is by no means limited to the above described embodiments and will find various applications other than those described above. For instance, the transparent substrate of an optical element according to the invention is not limited to a prism and a glass plate may alternatively be used for it. Accordingly, various modifications may be made without departing from the scope of the general inventive concept as defined by the appended claims and their equivalents.

## Claims

1. An optical element comprising a transparent substrate (41; 51) and a multilayer film (45; 55) formed on said transparent substrate, said multilayer film being formed by alternately laying one or more than one pairs of a low refractive index layer (43; 53) and a high refractive index layer (44; 54), said multilayer film satisfying the conditional formulas of

$$n_H \geq 2.2,$$

$$1.6 \leq n_L \leq 1.8,$$

$$1 \leq (n_H \times d_H)/(n_L \times d_L) \leq 2,$$

where the refractive index of the high refractive index layer is $n_H$, the film thickness of the high refractive index layer is $d_H$, the refractive index of the low refractive index layer is $n_L$ and the film thickness of the low refractive index layer is $d_L$.

2. An optical element according to claim 1, wherein said high refractive index layers (44; 54) are formed by using a material selected from a group of materials including $TiO_2$, $Nb_2O_5$ and $Ta_2O_5$ as principal ingredient and said low refractive index layers (43; 53) are formed by using a material selected from a group of materials including $Al_2O_3$, and a mixture of $Al_2O_3$ and $TiO_2$ as principal ingredient.

**3.** An optical element according to claim 1 or 2, wherein
said transparent substrate is a glass prism (41; 51).

**4.** An optical element according to claim 3, wherein
said optical element further comprises another glass prism (42; 52) bonded to said glass prism (41; 51) with said multilayer film (45; 55) interposed between them.

**5.** A liquid crystal projector comprising a light source (10), a color separation optical system (13, 14) for dividing the light emitted from said light source into a plurality of light beams having wavelengths different from each other, a plurality of liquid crystal panels (19, 20, 21) arranged on the respective light paths of said plurality of light beams produced by color separation, an optical element (22) according to any of claims 1 through 4 and adapted to synthetically combine said plurality of light beams modulated by said respective liquid crystal panels and a projection lens (23) for projecting the synthetically combined light beam produced from said optical element on a screen (24).

**6.** A camera comprising an objective lens (71) for taking in light showing an image, an optical element (72) according to any of claims 1 through 4 and adapted to divide the light taken in by said objective lens into a plurality of light beams having wavelengths different from each other for color separation, a plurality of image pickup elements (76, 77, 78) for respectively detecting said plurality of light beams after said color separation and outputting respective video signals and a signal processing circuit (79) for processing the video signal outputs from said image pickup elements.

FIG. 1

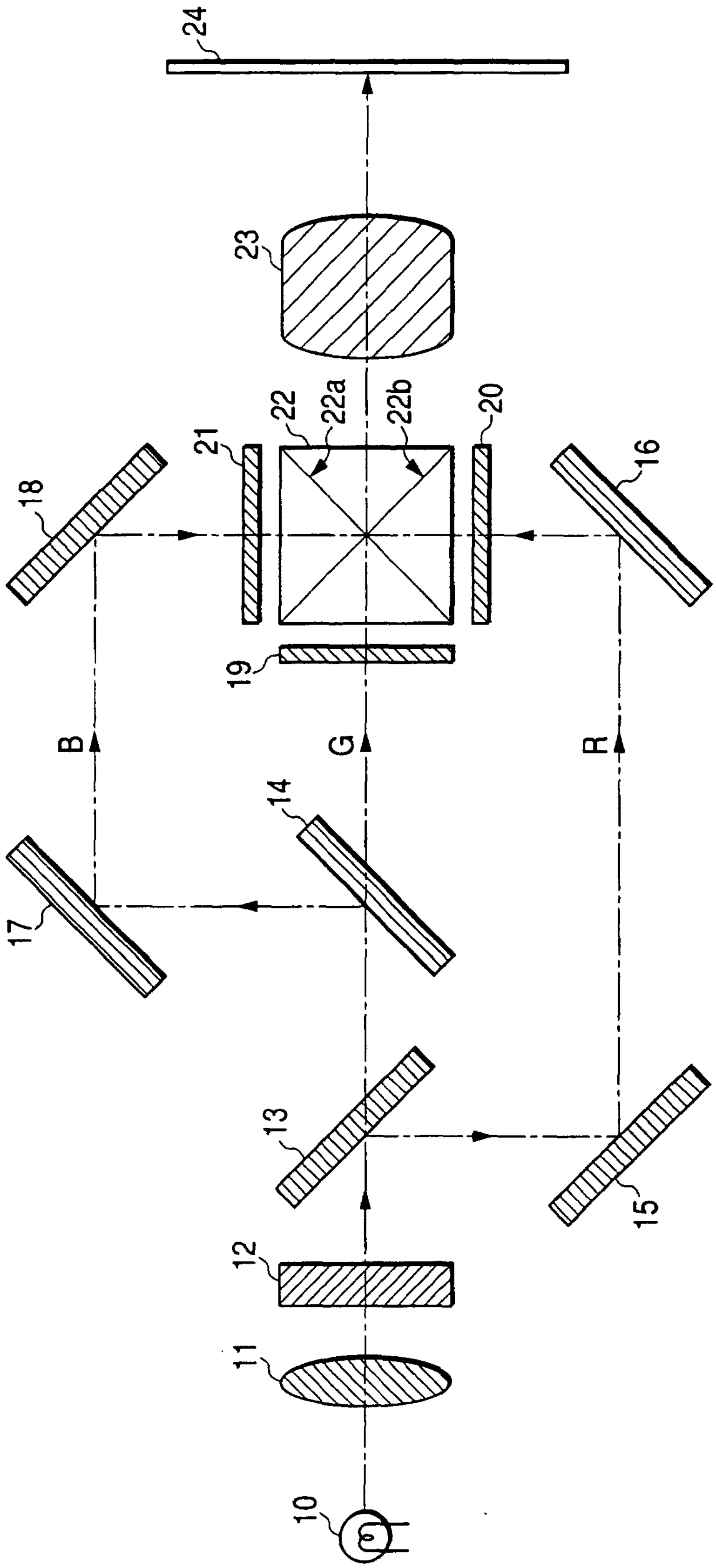

FIG. 2

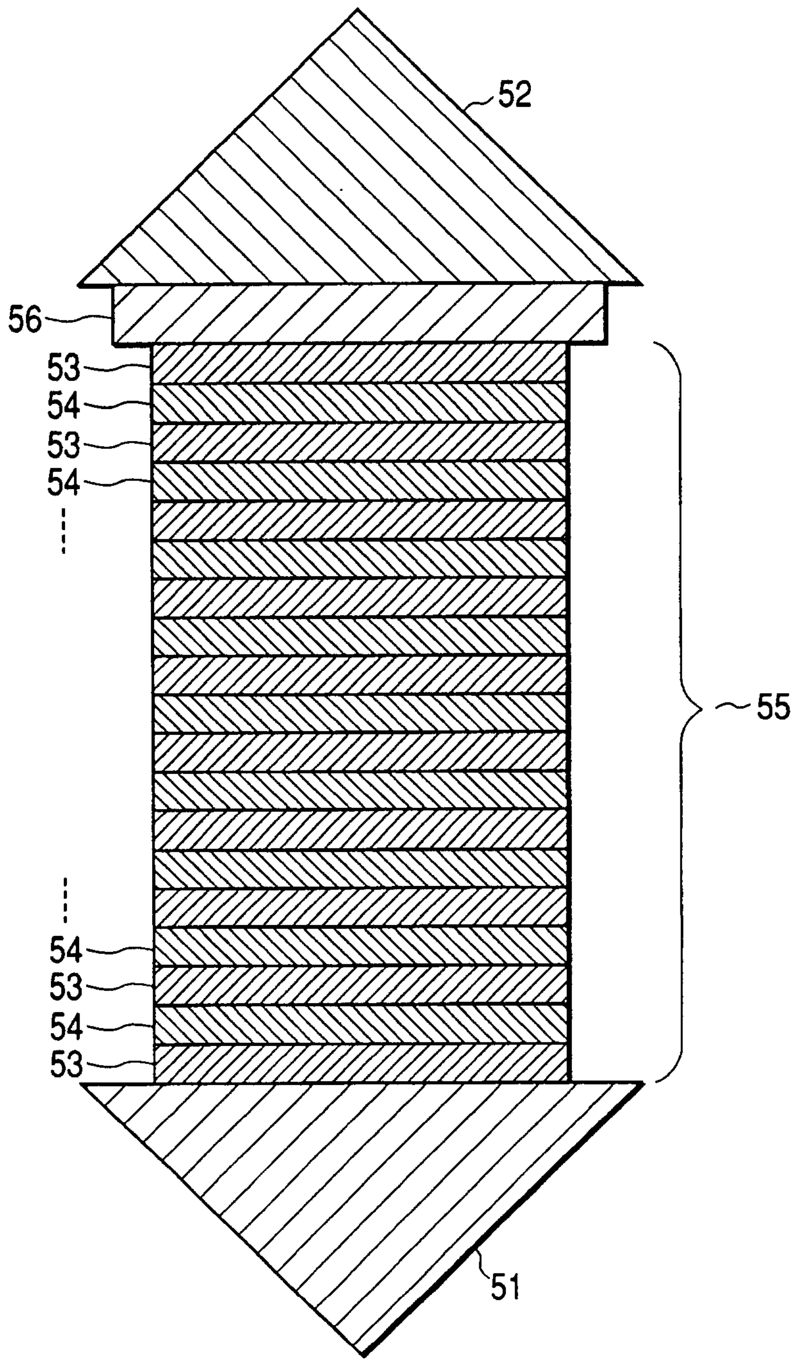

FIG. 3

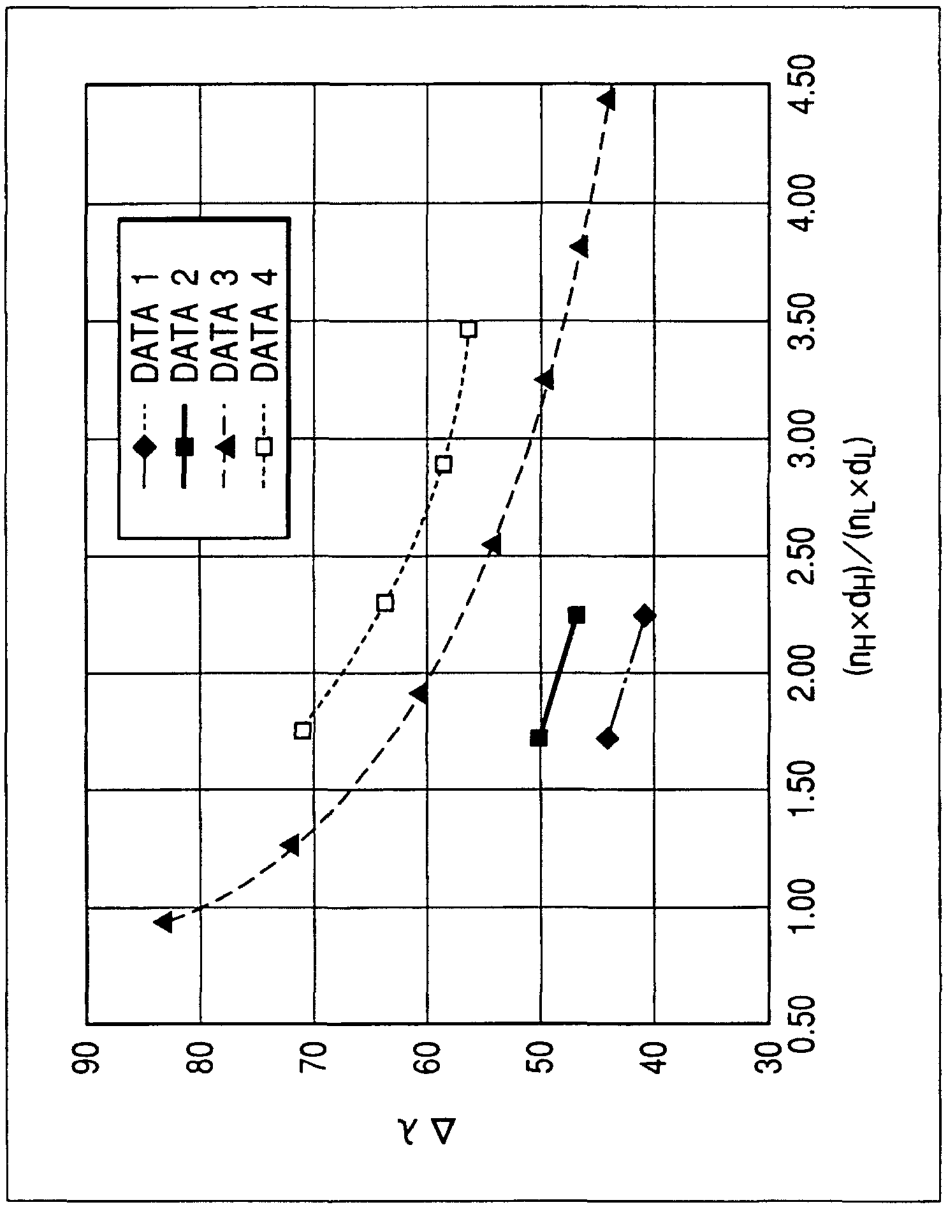
DATA 1
DATA 2
DATA 3
DATA 4
Δ λ
90
80
70
60
50
40
30
0.50
1.00
1.50
2.00
2.50
3.00
3.50
4.00
4.50
$(n_H \times d_H)/(n_L \times d_L)$

FIG. 4

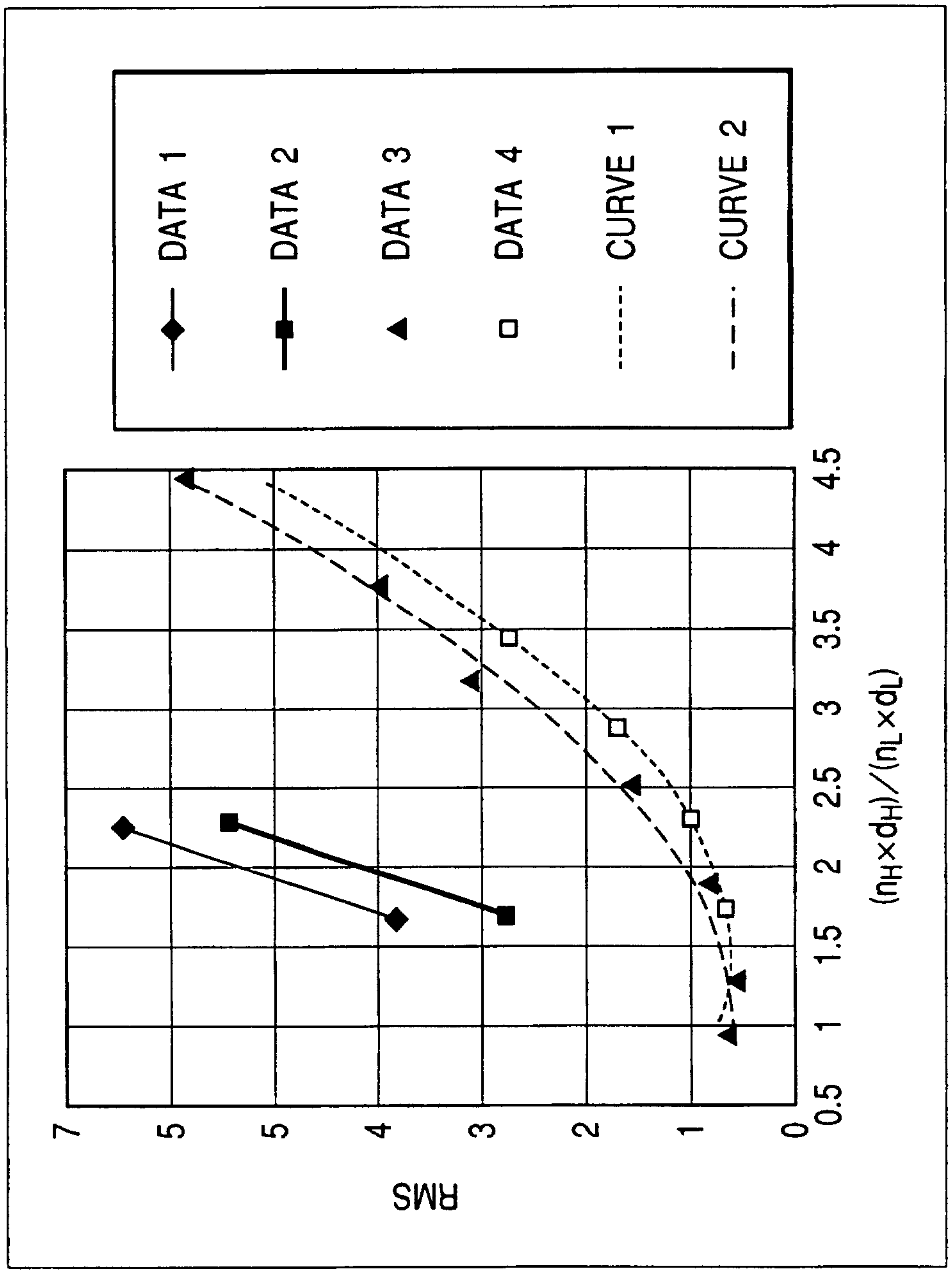
DATA 1
DATA 2
DATA 3
DATA 4
CURVE 1
CURVE 2
RMS
0.5
1
1.5
2
2.5
3
3.5
4
4.5
(nH×dH)/(nL×dL)

FIG. 5

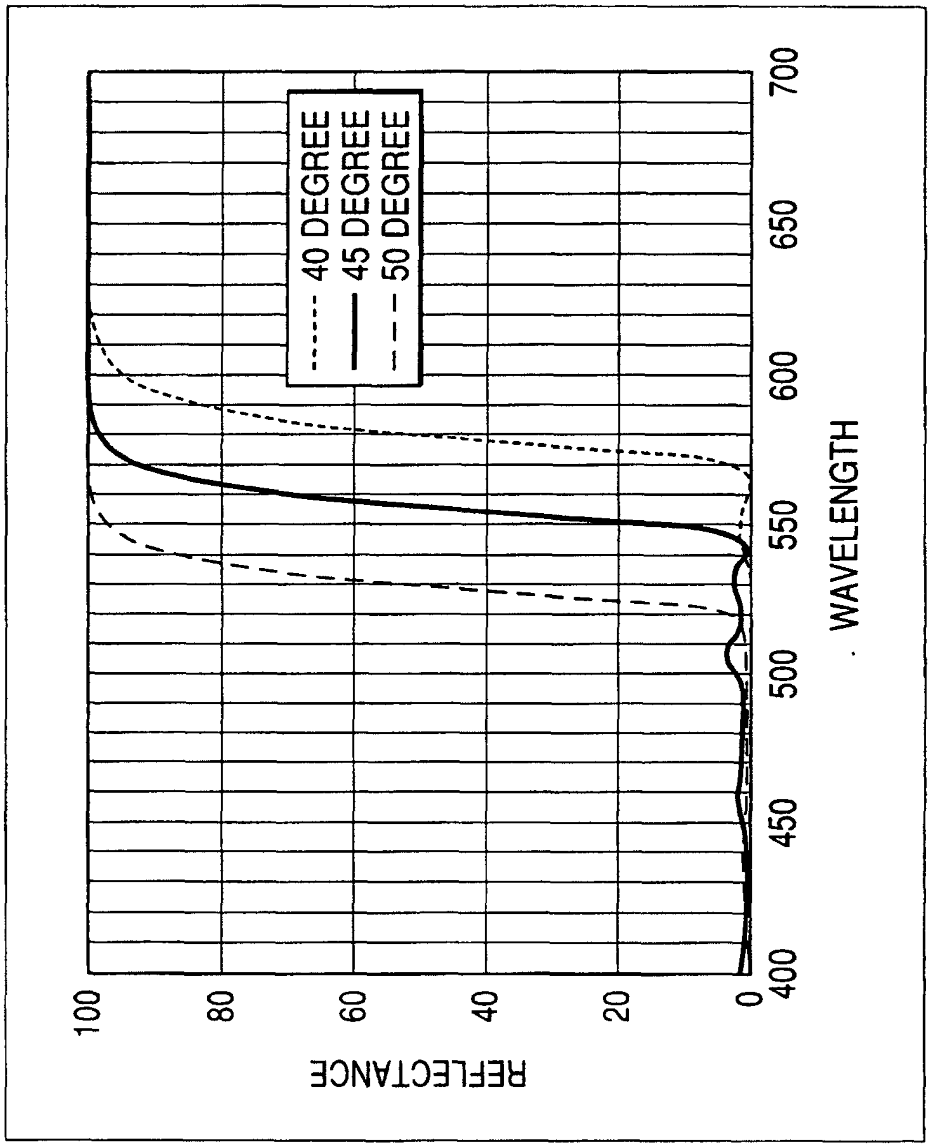

40 DEGREE
45 DEGREE
50 DEGREE
REFLECTANCE
100
80
60
40
20
0
WAVELENGTH
400
450
500
550
600
650
700

FIG. 6

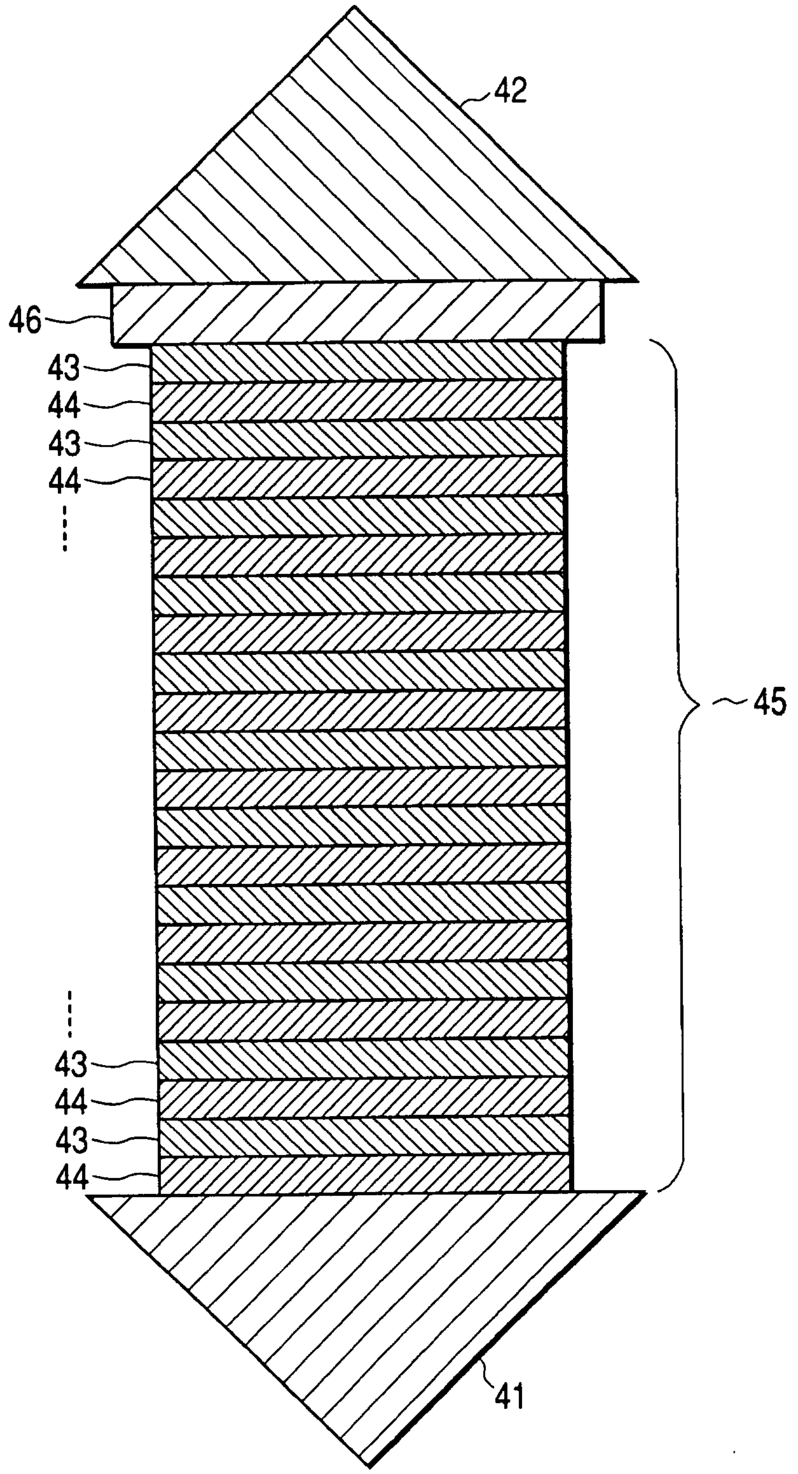

FIG. 7

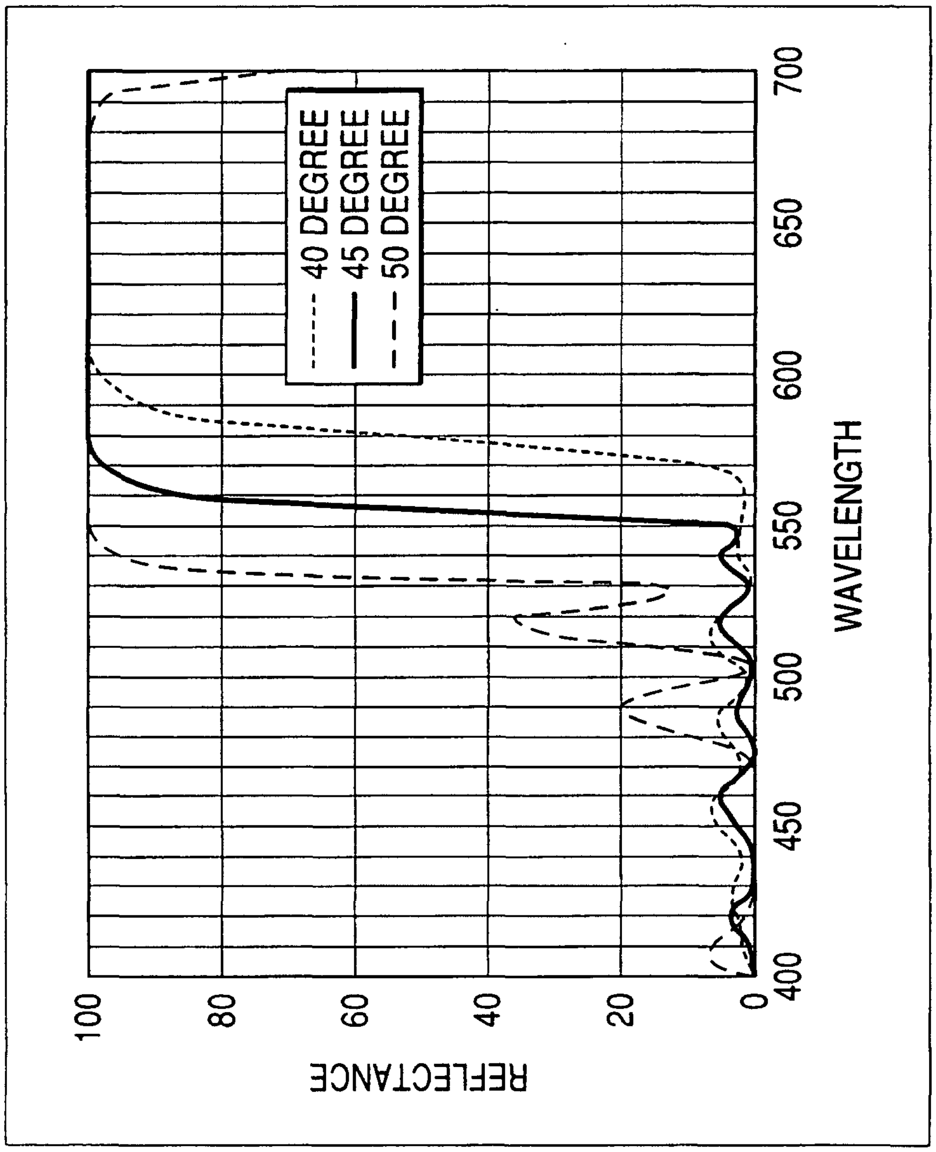
REFLECTANCE
100
80
60
40
20
0
WAVELENGTH
400
450
500
550
600
650
700
40 DEGREE
45 DEGREE
50 DEGREE

FIG. 8

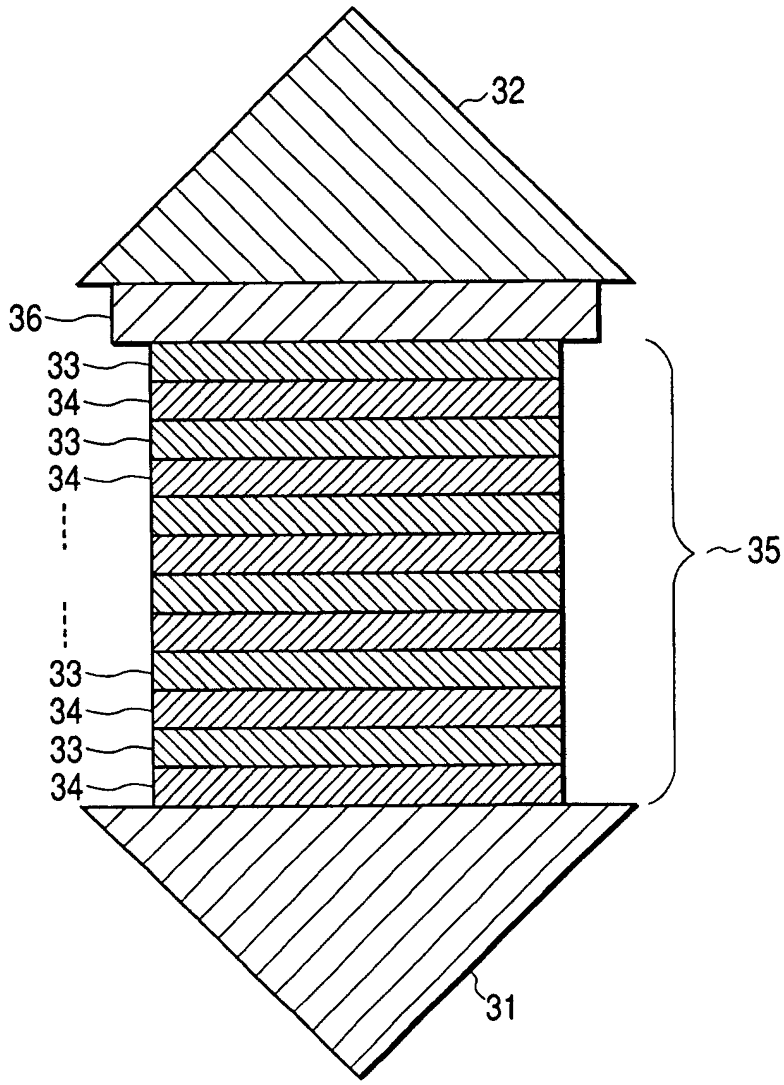

FIG. 9

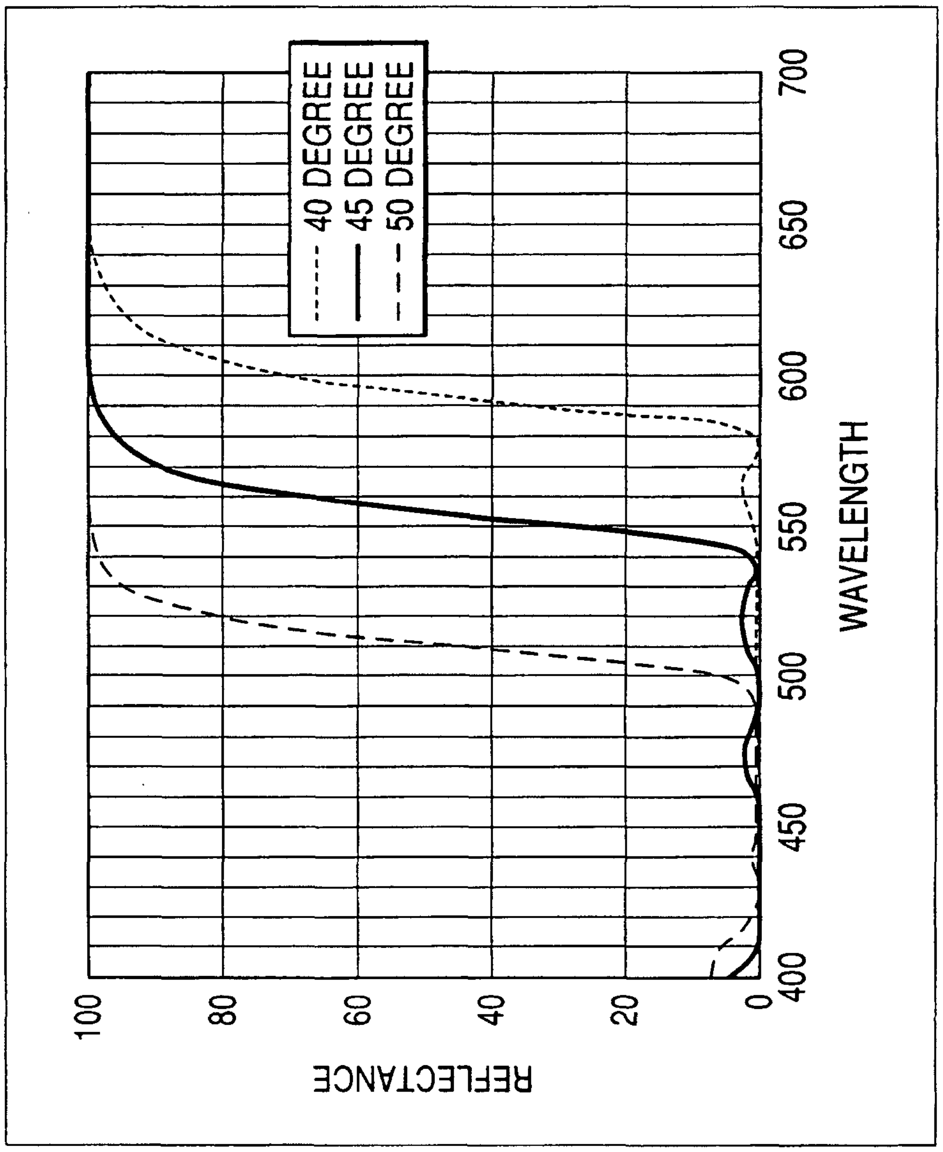

REFLECTANCE
100
80
60
40
20
0
400
450
500
550
600
650
700
WAVELENGTH
40 DEGREE
45 DEGREE
50 DEGREE

FIG. 10

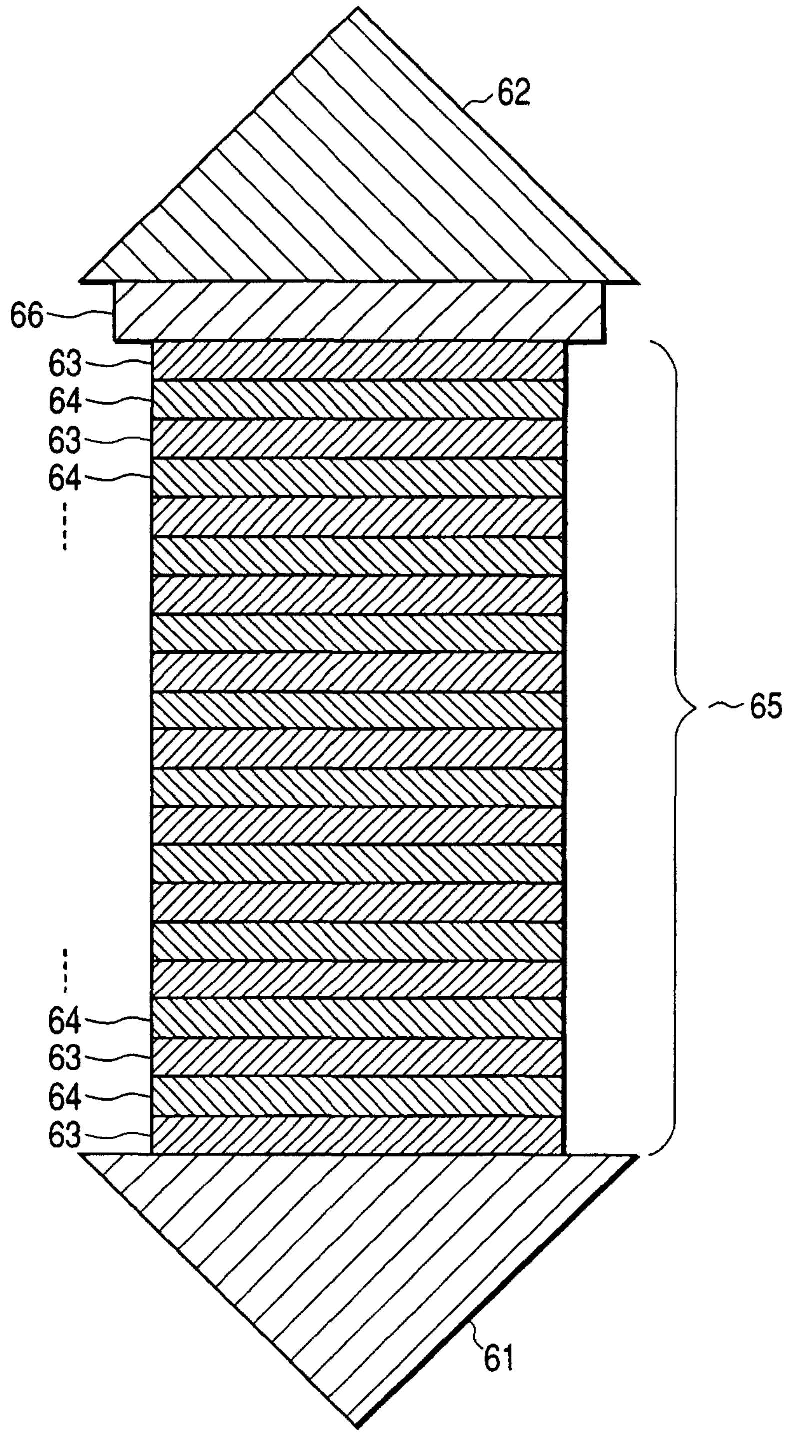

FIG. 11

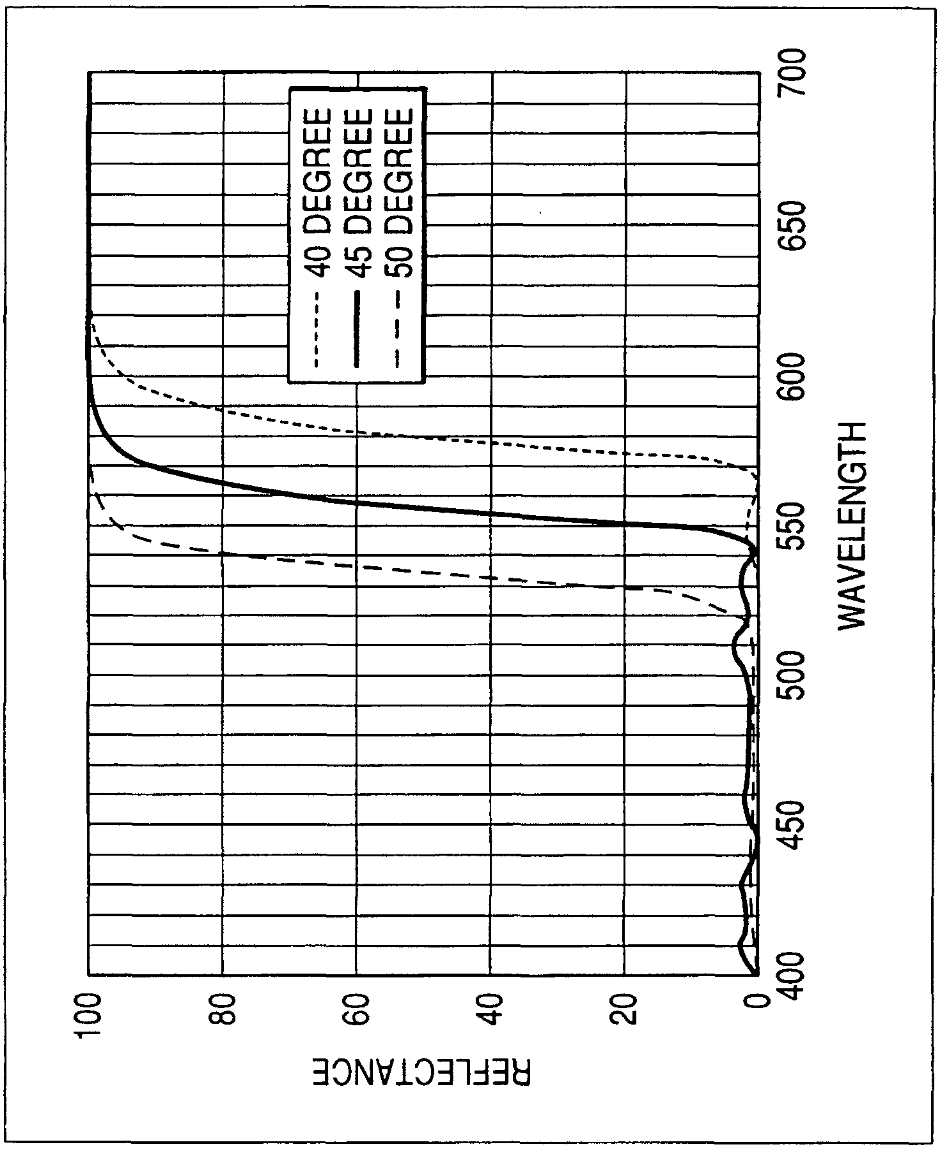
REFLECTANCE
100
80
60
40
20
0
400
450
500
550
600
650
700
WAVELENGTH
40 DEGREE
45 DEGREE
50 DEGREE

FIG. 12

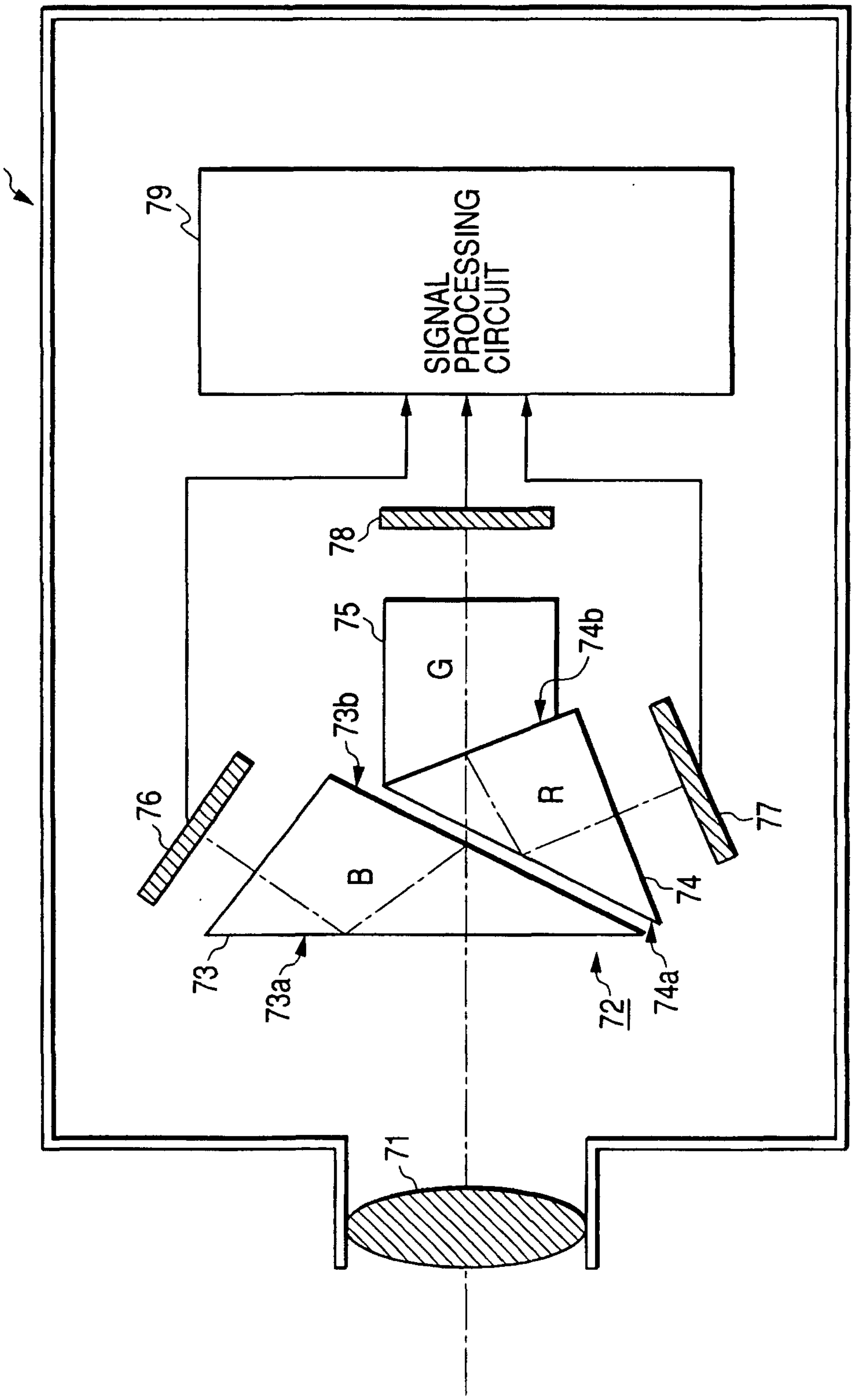
70
79
SIGNAL PROCESSING CIRCUIT
78
75
G
74b
73b
76
R
77
B
74
73
73a
72
74a
71